Europäisches Patentamt

European Patent Office

Office européen des brevets

(19)

(11) Veröffentlichungsnummer: **0 044 389**

**A1**

(12) # EUROPÄISCHE PATENTANMELDUNG

(21) Anmeldenummer: **81104032.8**

(22) Anmeldetag: **26.05.81**

(51) Int. Cl.³: **B 29 C 17/02**
**B 29 D 23/18**

(30) Priorität: **17.07.80 DE 3027045**

(43) Veröffentlichungstag der Anmeldung:
**27.01.82 Patentblatt 82/4**

(84) Benannte Vertragsstaaten:
**AT BE CH DE FR GB IT LI NL SE**

(71) Anmelder: Hegler, Wilhelm
Goethestrasse 2
D-8730 Bad Kissingen(DE)

(72) Erfinder: Hegler, Wilhelm
Goethestrasse 2
D-8730 Bad Kissingen(DE)

(72) Erfinder: Hegler, Ralph-Peter
Goethestrasse 2
D-8730 Bad Kissingen(DE)

(74) Vertreter: Rau, Manfred, Dr. Dipl.-Ing.
Postfach 91 04 80 Lange Zeile 30
D-8500 Nürnberg 91(DE)

(54) Verfahren und Vorrichtung zur Herstellung eines Flach-Hohlkörpers.

(57) Bei einem Verfahren zur Herstellung eines Flach-Hohlkörpers unter Verwendung einer auf einer Formstrecke (24) bewegten, aus endlos geführten Formabschnittshälften (22, 23) bestehenden Form, die beim Einlauf in die Formstrecke (24) jeweils paarweise unter Schließen der Form aufeinander zu und in Bewegungsrichtung (43) dicht aneinander anliegend geführt werden, wird der Form ein noch warmplastischer Schlauch (29) zugeführt und unter Vakuum in der Form verformt.

Um Flach-Hohlkörper kontinuierlich herstellen zu können, wird der Schlauch (29) bereits vor dem Zusammenführen zweier Formabschnittshälften (22, 23) zumindest in einem Teilbereich seines Querschnitts mit Vakuum beaufschlagt und über einen Teil eines Querschnitts unter Freilassung von Hohlräumen unter Bildung von Schweißstellen zusammengedrückt.

./...

*Fig.5*

Wilhelm Hegler, Goethestraße 2, 8730 Bad Kissingen
--------------------------------------------------------
Verfahren und Vorrichtung zur Herstellung eines
       Flach-Hohlkörpers
--------------------------------------------------------

Die Erfindung betrifft ein Verfahren zur Herstellung
eines Flach-Hohlkörpers gemäß dem Oberbegriff des
Patentanspruches 1 und eine Vorrichtung zur Durchführung dieses Verfahrens nach dem Oberbegriff des
Patentanspruches 7.

Flach-Hohlkörper der gattungsgemäßen Art, wie sie beispielsweise als Lüftungs- und Drainage-Platten bzw.
-Matten oder als Wärmetausch-Platten oder -Matten für
Absorber oder Fußbodenheizungen eingesetzt werden,
sind aus der DE-OS 25 21 374 bekannt. Derartige Flach-
Hohlkörper werden aus durch Tiefziehen verformten
Platten durch Verschweißen, Verkleben od. dgl. hergestellt. Diese Art der Herstellung ist außerordentlich aufwendig und nur diskontinuierlich möglich.

Aus der DE-OS 22 1o 445 ist es bekannt, eine Thermoplast-Isolierfolie mit einer Vielzahl von gasgefüllten
Zellen als Verpackungs- oder Wärme-Schutzmaterial
kontinuierlich aus einem warmplastischen Schlauch extrem dünner Wandstärke in eine aus zwei gegensinnig antreibbaren Trommeln bestehenden Vorrichtung herzustellen, die jeweils in ihrer Oberfläche den Zellen entsprechende Ausnehmungen aufweisen, die wiederum von der Innenseite der Trommeln her mit Vakuum beaufschlagbar sind. Auf einer derartigen Vorrichtung können nur extrem dünnwandige Folien mit einer Stärke von o,1 bis o,2 mm verarbeitet werden, da eine Kühlung des Schlauches nach der Verformung aber noch während des Verbleibs im Spalt zwischen den Trommeln nicht möglich ist. Zur Herstellung von Flach-Hohlkörpern mit einer Wandstärke von nur einigen Zehntel Millimetern ist eine solche Vorrichtung ungeeignet.

Der Erfindung liegt daher die Aufgabe zugrunde, ein Verfahren und eine Vorrichtung der gattungsgemäßen Art zu schaffen, womit Flach-Hohlkörper der gattungsgemäßen Art kontinuierlich hergestellt werden können.

Diese Aufgabe wird erfindungsgemäß bei einem Verfahren der gattungsgemäßen Art durch die kennzeichnenden Merkmale des Patentanspruches 1 gelöst. Durch das erfindungsgemäße Verfahren wird erreicht, daß der Flach-Hohlkörper in einem einzigen Arbeitsgang fortlaufend ohne vorherige Erzeugung eines Halbzeuges aus einem Schlauch erzeugt werden kann, wobei wiederum aber auch verhältnismäßig dickwandige Schläuche eingesetzt werden können, damit eine ausreichende Druckfestigkeit des Flach-Hohlkörpers erreicht wird. Diese Art der Fertigung erlaubt es, im Detail unterschiedliche Ausgestaltungen des Flach-Hohlkörpers nach dem gleichen Verfahren herzustellen. So können derartige Flach-Hohlkörper beispielsweise einerseits als Lüftungs- und Drainage-Platten oder -Matten für Hausisolierungen und andererseits als Wärmetausch-Platten oder -Matten, beispielsweise zur Anwendung bei Solar-Wärmeanlagen oder bei Wärmepumpen oder bei Fußbodenheizungen,ausgebildet sein. Wesentlich ist, daß der noch warmplastische Schlauch vor dem vollständigen Schließen der Form bereits durch Vakuum-Beaufschlagung von außen vorverformt wird. Diese Maßnahme ist deshalb besonders wesentlich, weil eine Vielzahl von Schweißstellen vorzusehen ist. Bei einem Zusammendrücken des Schlauches ohne diese Maßnahme würde der Schlauch über seine volle Breite zusammenkleben, wenn er nicht durch Vorab-Beaufschlagung mit Vakuum vorverformt und aus dieser vorgeformten Stellung dann zusammengedrückt würde.

Der Patentanspruch 2 gibt wieder, in einer wie kurzen Zeitfolge die Vorab-Beaufschlagung des noch warmplastischen Schlauches mit Vakuum erfolgt. Durch die Maßnahmen nach den Patentansprüchen 3 und 4 wird insbesondere die bereits geschilderte Vorformung des noch warmplastischen Schlauches gefördert.

Um sicherzustellen, daß ein einwandfreier Einlauf des noch warmplastischen Schlauches in die Form erreicht wird, sind die Maßnahmen nach dem Patentanspruch 5 vorgesehen.

Der Patentanspruch 6 gibt wieder, welche relativ hohen Wandstärken des Schlauches bei dem erfindungsgemäßen Verfahren eingesetzt werden können, ohne daß es zu Problemen bei der Vakuum-Verformung kommt.

Bei der Vorrichtung nach dem Oberbegriff des Patentanspruches 7 wird durch dessen kennzeichnende Merkmale in konstruktiv einfacher Weise erreicht, daß die Vakuum-Beaufschlagung tatsächlich bereits vor dem Schließen der Form erfolgt.

- 4 -

Die Patentansprüche 8 und 9 geben Maßnahmen wieder, mittels derer sichergestellt ist, daß trotz der für eine wirtschaftlich interessante Fertigung solcher Flach-Hohlkörper großen Abmessungen des warmplastischen Schlauches eine saubere Einführung dieses noch warmplastischen Schlauches in die sich schließende Form erreicht wird.

Weitere Vorteile und Merkmale der Erfindung ergeben sich aus der nachfolgenden Beschreibung anhand der Zeichnung. In der Zeichnung zeigen

Fig. 1 eine Draufsicht auf zwei miteinander verbundene Lüftungs- und Drainage-Platten bzw. -Matten,

Fig. 2 einen senkrechten Schnitt durch Fig. 1 gemäß der Schnittlinie II-II in Fig. 1,

Fig. 3 eine Anwendung der Platte bzw. Matte nach den Fig. 1 bzw. 2 im Erdreich vor einer Kellerwand in einer Schnittdarstellung entsprechend der Schnittlinie III-III in Fig. 2,

Fig. 4 mehrere Platten bzw. Matten nach den Fig. 1 und 2 im Stapel bzw. Wickel in einer der Schnittlinie III-III entsprechenden Darstellung,

Fig. 5 einen Teilausschnitt aus einer Vorrichtung zur Herstellung eines Flach-Hohlkörpers im horizontalen Längsschnitt,

Fig. 6 einen Teilausschnitt aus der Vorrichtung im vertikalen Längs-Schnitt,

Fig. 7 bis 9 drei Vertikalschnitte durch die Vorrichtung nach den Fig. 5 und 6 entsprechend den
Schnittlinien VII-VII bis IX-IX in Fig. 5
und 6,

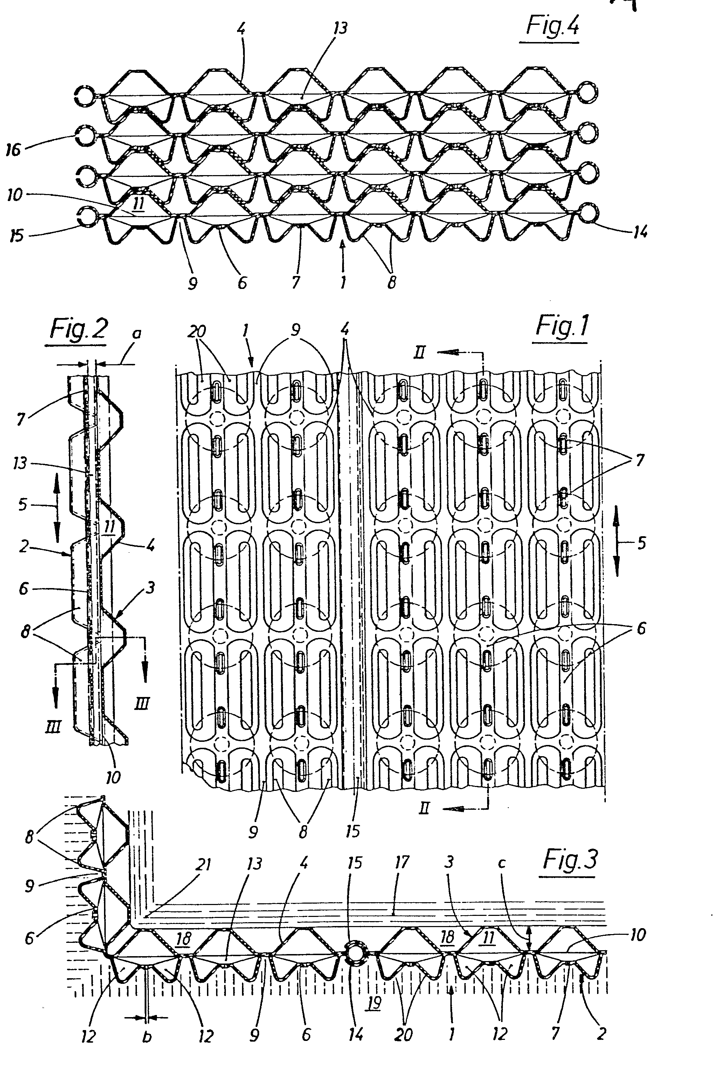

Fig. 1o eine Draufsicht auf eine Wärmetausch-Platte
für Fußbodenheizungen bzw. Absorber,

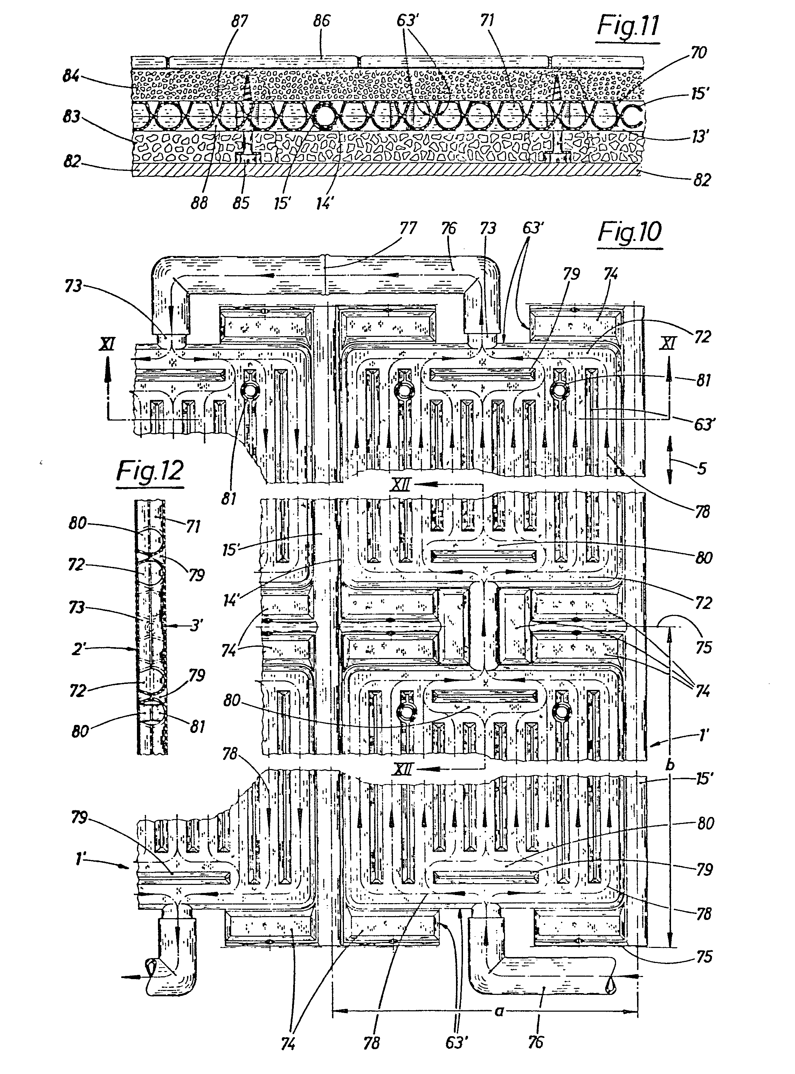

Fig. 11 einen Querschnitt gemäß der Schnittlinie XI-XI
in Fig. 1o und

Fig. 12 einen Teil-Längsschnitt gemäß der Schnittlinie
XII-XII in Fig. 1o.

Der in den Fig.1 bis 4 dargestellte, als Lüftungs-Drainage-Platte bzw. -Matte dienende Flach-Hohlkörper 1 weist zwei Begrenzungswände 2, 3 auf. In der einen Begrenzungswand 3 sind im Abstand voneinander kegelstumpfförmige Abstandshalter 4 ausgeformt.

In der anderen Begrenzungswand 2 sind in Längsrichtung 5 der Matte bzw. Platte verlaufende Leisten 6 ausgebildet, in denen schlitz- bzw. langlochförmige Wasser-Eintrittsöffnungen 7 ausgebildet sind. Jeweils beiderseits einer solchen mit Wasser-Eintrittsöffnungen 7 versehenen Leiste 6 sind tunnelförmige Versteifungsrippen 8 aus der Begrenzungswand 2 entgegen zur Richtung der Abstandshalter 4 ausgeformt. Zwischen zwei einander jeweils benachbarten Versteifungsrippen 8 sind Stege 9 verblieben, die in der Mittelebene 1o des Hohlkörpers 1 verlaufen. Diese Stege 9 verlaufen also parallel zu den Leisten 6. Die Begrenzungswand 3 liegt - mit Ausnahme der kegelstumpfförmigen Abstandshalter 4 - im Bereich der Mittelebene 1o. Die beiden Begrenzungswände 2, 3 liegen daher im Bereich der in Längsrichtung 5 verlaufenden Stege 9 flächig aneinander und sind in diesem Bereich miteinander verschweißt, wie insbesondere aus Fig. 3 ersichtlich ist.

Wie insbesondere aus Fig. 1 ersichtlich ist, sind die in Längsrichtung 5 verlaufenden Versteifungsrippen 8 jeweils in dem Bereich unterbrochen, in dem in der anderen Begrenzungswand 3 die kegelstumpfförmigen Abstandshalter 4 ausgeformt sind. Die Platte bzw. Matte ist hierdurch bedingt so biegsam, daß sie - wenn auch mit entsprechend großem Kerndurchmesser - zu einem Wickel aufgewickelt werden kann.

Die langloch- bzw. schlitzförmigen Wasser-Eintrittsöffnungen 7 sind derart in den Leisten 6 angeordnet, daß sie zumindest teilweise überlappend zu den durch die Abstandshalter 4 umschlossenen Hohlräumen 11 liegen.

Weiterhin sind die durch die Versteifungsrippen 8 gebildeten Kanäle 12 ebenfalls jeweils an ihren Enden
mit den Hohlräumen 11 überlappend ausgebildet, so daß
hier jeweils Räume ausreichend großen Querschnitts
ineinander übergehen, ohne daß zwischen ihnen einen
Strömungswiderstand darstellende Querschnittsverengungen gegeben wären.

Wie aus Fig. 2 hervorgeht, haben die Leisten 6 einen
Abstand a von 4 bis 1o mm von der Mittelebene 1o, d.h.
von dem ebenen Teil der Begrenzungswand 3, so daß auch
in diesem Bereich unmittelbar in der Linie von Wasser-
Eintrittsöffnungen 7 ein Kanal 13 gebildet wird. Diese
Höhe a des Kanals 13 ist jeweils um das drei- bis fünffache größer als die Breite b der schlitz- bzw. langlochförmigen Wasser-Eintrittsöffnungen 7.

An einer Längsseite des Hohlkörpers 1 ist eine Kupplungsleiste 14 mit geschlossenem,kreiszylindrischen Profil
angeformt, die einstückig aus den beiden Begrenzungswänden 2, 3 in diesem Bereich ausgeformt ist. An der
entgegengesetzten Längsseite ist ein komplementäres
Kupplungsprofil 15 ausgebildet, das in der Mittelebene
1o an seiner freiliegenden Seite mit einem Schlitz 16
versehen ist. Jeweils eine Hälfte dieses ebenfalls
Kreiszylinderprofil aufweisenden Kupplungsprofils 15
ist aus einer Begrenzungswand 2 bzw. 3 ausgeformt.

Eine Kupplung zweier benachbart anzuordnender Matten
bzw. Bahnen erfolgt in der Weise, daß das Kupplungsprofil
15 der einen Platte bzw. Matte unter elastischer Aufweitung über die Kupplungsleiste 14 einer benachbarten
Platte oder Matte geschoben wird, wie es aus Fig. 3
ersichtlich ist.

Bei einem bestimmungsgemäßen Einsatz eines solchen als Lüftungs- und Drainage-Platte bzw. -Matte dienenden Flach-Hohlkörpers 1 werden die außenliegenden Flächen der Abstandshalter 4 gegen eine Kellerwand 17 eines Hauses  angelegt. Zwischen der Platte bzw. Matte und der Kellerwand 17 entsteht hierbei ein Luftraum 18, dessen Breite c im wesentlichen der Tiefe der Abstandshalter 4 entspricht. Dieser Luftraum 18 wird nur durch die im Abstand voneinander angeordneten Abstandshalter 4 unterbrochen, die - wie insbesondere aus Fig. 1 ersichtlich ist - höchstens ein Fünftel der Gesamtfläche der Matte bzw. Platte einnehmen. c wird in der Regel 2o bis 4o mm betragen.

Die andere Begrenzungswand 2 wird bei diesem bestimmungsgemäßen Gebrauch mit Erdreich 19 bedeckt und durch dieses Erdreich gegen die Kellerwand 17 gedrückt. Ergänzend sei hinzugefügt, daß die Platten bzw. Matten mit ihrer Längsrichtung 5 vertikal vor einer Kellerwand 17 angeordnet werden. Aus dem Erdreich 19 gegen die Matte bzw. Platte drückendes Wasser wird über die zugeordneten Schrägflächen 2o der Versteifungsrippen 8 zur jeweiligen Leiste 6 hingeleitet und tritt dort durch die Wasser-Eintrittsöffnungen 7 in den zugeordneten Kanal 13 bzw. gleich in den durch einen Abstandshalter 4 gebildeten Hohlraum 11. Von dort fließt das Wasser jeweils abwechselnd durch einen von einer Versteifungsrippe 8 umgrenzten Kanal 12 und einen Hohlraum 11 eines Abstandshalters 4 frei nach unten, also in Längsrichtung 5 der Matte bzw. Platte ab. Die offenen unteren Enden der Kanäle dienen als Wasser-Austrittsöffnungen.
Dadurch, daß nur im Bereich der Stege 9 verhältnismäßig schmale Schweißnähte zwischen den Begrenzungswänden 2 und 3 vorhanden sind, kann eine solche Platte oder Matte an einer Kellerwandecke 21 leicht um 9o$^\circ$ gebogen werden, wie aus Fig. 3 hervorgeht.

Wie Fig. 4 erkennen läßt, ist der Abstand zweier in einer Längslinie liegender Versteifungsrippen 8 und deren Neigung, insbesondere ihrer Schrägflächen 2o in diesem Bereich, so ausgebildet, daß in den Bereich, wo jeweils vier Versteifungsrippen 8 beiderseits einer Leiste 6 gleichsam eine kreuzförmige Verbindungsstelle begrenzen, ein Abstandshalter 4 ausreichenden Raum hat, so daß ein dichtes Stapeln der Matten bzw. Platten möglich ist.

Ein entsprechender Flach-Hohlkörper kann auch so ausgestaltet werden, daß er als Absorber bzw. Wärmetauscher für eine Solar-Heizung oder eine Wärmepumpe einsetzbar ist. Eine entsprechende Ausgestaltung wird weiter unten noch als Ausführungsbeispiel beschrieben.

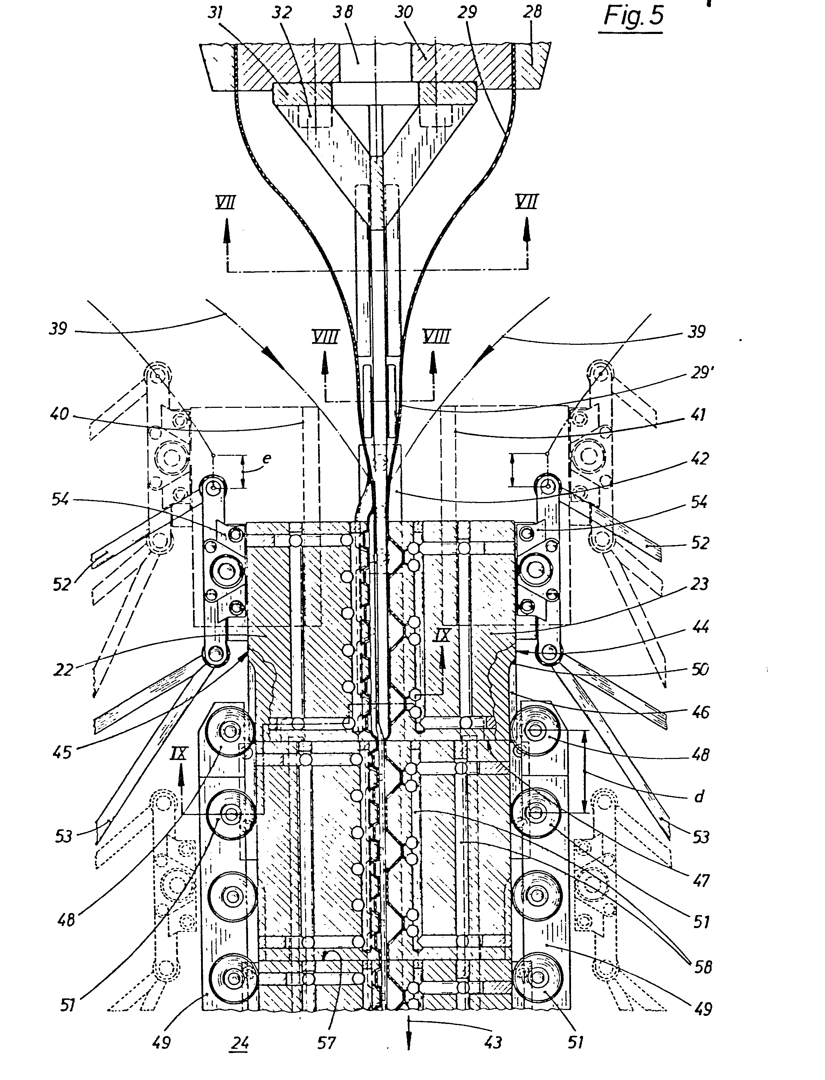

Die in den Fig. 5 bis 9 im Teilausschnitt dargestellte Vorrichtung zur Herstellung der geschilderten Flach-Hohlkörper 1 entspricht in ihrem Gesamtaufbau der Vorrichtung, wie sie in der DE-OS 28 32 35o dargestellt und beschrieben ist. Sie weist demzufolge eine Vielzahl von endlos geführten Formabschnittshälften 22, 23 auf, die sich auf einer Formstrecke 24 jeweils zu einer Hohlform ergänzen bzw. zusammenfügen. Die Führung dieser Formabschnittshälften kann selbstverständlich auch nach dem sogenannten Kettenumlaufverfahren erfolgen, wie es beispielsweise in der DE-OS 2o 61 o27 dargestellt und beschrieben ist.

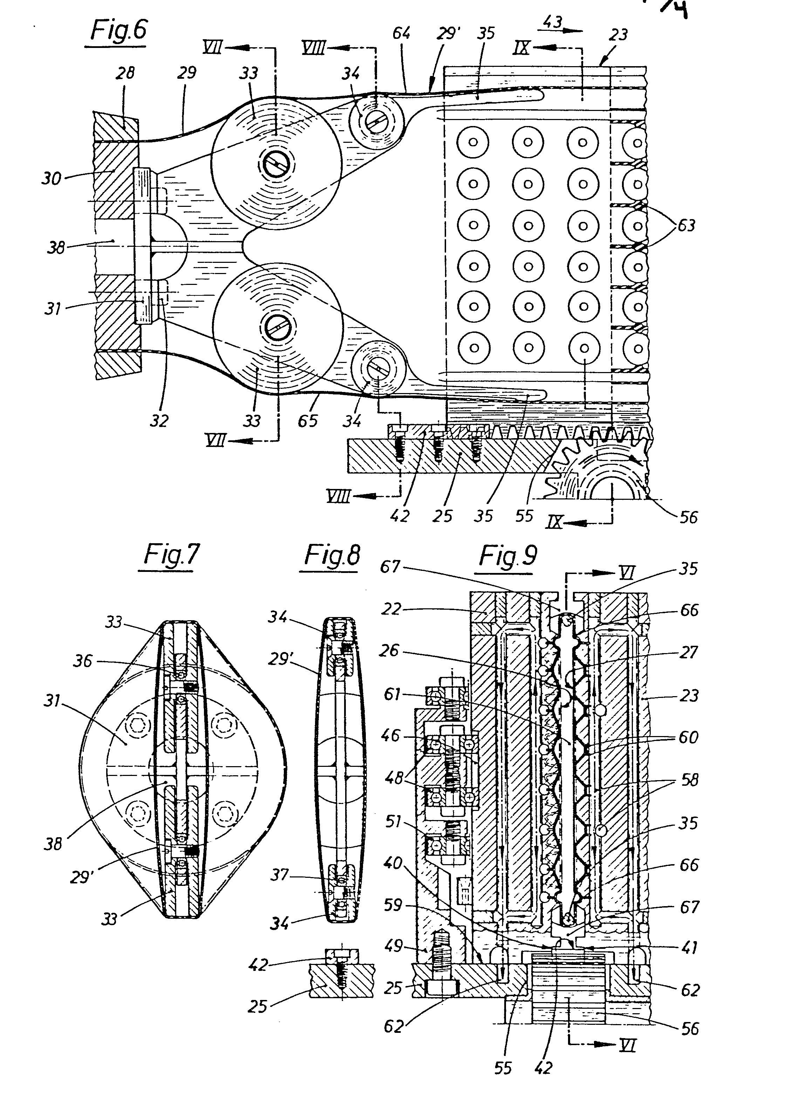

Die einander jeweils paarweise zugeordneten Formabschnittshälften 22, 23 haben einen etwa quaderförmigen Querschnitt und werden über einen ebenen Maschinentisch 25 geführt. Sie weisen jeweils an ihren einander benachbarten, also bei geschlossener Form aneinander anliegenden Seiten 26, 27 eine Ausgestaltung auf, die der Außenform der zu verformenden Begrenzungswand 2 bzw. 3 entspricht. Die endlos umlaufend angetriebenen Formabschnittshälften 22, 23 schwenken am Beginn der Formstrecke 24 in diese ein. Diesem Beginn der Formstrecke 24 ist eine Spritzdüse 28 einer im einzelnen, nicht dargestellten Kunststoff-Spritzmaschine vorgeordnet, aus der ein zylindrischer Schlauch 29 ausgespritzt wird. An dieser Spritzdüse 28, und zwar an ihrem innenliegenden Spritzdorn 3o, ist ein Lagerbock 31 mittels Schrauben 32 befestigt, der in seinem oberen Bereich und in seinem unteren Bereich jeweils zwei um horizontale Achsen drehbare Stütz- und Führungsrollen 33, 34 trägt. Auf diesen Stütz- und Führungsrollen 33, 34 stützt sich der Schlauch 29 ab. Gleichzeitig wird er mittels dieser Stütz- und Führungsrollen zu einem flachen Schlauch 29' verformt. Diese Stütz- und Führungsrollen 33, 34 sind auch deshalb erforderlich, da die obenbeschriebenen Flach-Hohlkörper erst in Bahnbreiten ab 25cm für die Praxisanwendung von Interesse sind. Wegen dieser großen Abmessungen ist die Abzugsgeschwindigkeit des Schlauches 29 bzw. 29' aus der Spritzdüse 28 verhältnismäßig gering, so daß hier besondere Führungs- und Abstützprobleme auftreten. Der Lagerbock endet etwa in der einerseits durch die oberen bzw. die unteren Stütz- und Führungsrollen 33 und 34 aufgespannten Ebene in verhältnismäßig langen Führungszungen 35, die bis in den Bereich hineinragen, in dem sich die einander zugeordneten Formabschnittshälften 22, 23 einander nähern (Fig. 6, 9).

Wie aus den Figuren 7 und 8 hervorgeht, sind die Stütz- und Führungsrollen 33, 34 jeweils mittels Wälzlagern 36, 37 leichtgängig gelagert, so daß auf den ja noch warmplastischen Schlauch 29 bzw. 29' nur die geringstmöglichen, in dem Abstützbereich verformenden Kräfte ausgeübt werden.

Im Spritzdorn 3o der Spritzdüse 28 ist ein Stützluft-Kanal 38 ausgebildet, durch den Stützluft mit einem Druck von nur wenigen Hundertstel bar, beispielsweise o,o1 bis o,5 bar, in den Schlauch 29, 29' eingeblasen werden kann, wodurch zum einen eine Entlastung des Schlauchs 29, 29' im Bereich der oberen Stütz- und Führungsrollen 33, 34 eintritt, und wodurch zum anderen der Schlauch - wie aus den Figuren 7 und 8 ersichtlich - leicht aufgebläht wird.

Die Formabschnittshälften 22, 23 werden beim Einlauf in die Formstrecke entsprechend der jeweiligen Einschwenkkurve 39 zuerst in eine zueinander parallele Vorformstellung gebracht, in der die einander zugeordneten Seiten 26, 27 noch einen Abstand voneinander haben, der größer ist, als die Summe der Wandstärken des Schlauches 29 bzw. 29', aber bereits geringer ist, als die Breite des bereits flach gezogenen Schlauches 29' (vgl. hierzu Fig. 8 und 9). In dieser Vorformstellung legen sich die beiden einander zugeordneten Formabschnittshälften 22, 23 mit an ihren unteren Rändern ausgebildeten Anschlagflächen 4o, 41 gegen eine auf dem Maschinentisch 25 befestigte Anschlagleiste 42, wodurch eine Parallellage der Formabschnittshälften 22, 23 zueinander und deren Parallelverschiebung längs der Bewegungsrichtung 43 auf der Formstrecke 24 erzwungen wird.

An den einander abgewandten Außenflächen 44, 45 der Formabschnittshälften 22, 23 ist jeweils eine nutförmige Ausnehmung 46 ausgebildet, die sich ausgehend von der in Bewegungsrichtung 43 vornliegenden Stirnseite 47 über einen Teil der Länge einer jeden Formabschnittshälfte 22 erstreckt. Die Tiefe dieser Ausnehmung 46 entspricht jeweils der Hälfte des Abstandes, den die beiden Formabschnittshälften 22, 23 in dieser Vorformstellung voneinander haben. In jede solche Ausnehmung 46 greift beim Einlauf der jeweiligen Formabschnittshälfte 22 bzw. 23 in die Vorformstellung ein Paar Einlaufrollen 48 ein, die in auf dem Maschinentisch 25 beidseitig der Formstrecke 24 befestigten Lagerböcken 49 um eine vertikale Achse drehbar gelagert sind. Die jeweilige Ausnehmung 46 geht an ihrem der Spritzdüse 28 zugewandten Ende mit einer Übergangsrampe 5o in die jeweilige Außenfläche 44 bzw. 45 der entsprechenden Formabschnittshälfte 22, 23 über, so daß bei Erreichen dieser Stellung das jeweilige Paar von Einlaufrollen 48 die Formabschnittshälften 22, 23 aufeinanderzu in ihre Schließstellung drücken. Gleichzeitig greift jeweils ein erstes Paar von Schließrollen 51 oberhalb und unterhalb der entsprechenden Ausnehmung 46 an der entsprechenden Außenfläche 44, 45 im Bereich der vorlaufenden Stirnseite 47 an, so daß die Schließbewegung sehr schnell und gleichmäßig und unter paralleler Verschiebung der Formabschnittshälften 22, 23 aufeinanderzu erfolgt. Damit dies sichergestellt ist, ist also der Achsabstand d der Einlaufrollen 48 und des ersten Schließrollenpaares 51 gleich der Länge der Ausnehmung 46. Die Schließrollen 51 sind ebenfalls im Lagerbock 49 jeweils um vertikale Achsen drehbar gelagert, und zwar gleichermaßen wie in Bewegungsrichtung 43 über die Länge der Formstrecke 24 angeordnete weitere Schließrollen 51, die die jeweiligen Paare von Formabschnitts-

- 13 -

hälften 22, 23 über die gesamte Formstrecke 24 gegeneinander gepreßt halten.

Der Transport der Formabschnittshälften 22, 23 unter anderem über die Einschwenkkurve 39 bis in die in Fig. 5 ausgezogen dargestellte Vorformstellung erfolgt mittels als Parallellenker ausgebildeter Schwenkarme 52, die an ihren einander zugewandten Enden jeweils eine Spannvorrichtung 54 aufweisen, mittels derer die Formabschnittshälften gehalten und bis in die Vorformstellung transportiert werden. Die Ausgestaltung dieser Parallellenker und deren Antrieb ist bekannt und beispielsweise in der DE-OS 28 32 35o ausführlich dargestellt und beschrieben. Nach der in Fig. 5 gestrichelt dargestellten Einschwenkbewegung der Parallellenker mit angekoppelter Formabschnittshälfte 22 bzw. 23 und einer kurzen Parallelverschiebung längs einer Strecke e werden die Spannvorrichtungen 54 ausgekuppelt und die Schwenkarme 52, 53 mit Spannvorrichtung 54 in die in Fig. 5 punktiert dargestellte Stellung verfahren und dann in Bewegungsrichtung 43 zum nicht dargestellten Ende der Formstrecke 24 verfahren, wo ein aus der Formstrecke ausfahrendes Paar von Formabschnittshälften 22, 23 ergriffen und zum Beginn der Formstrecke zurücktransportiert wird. Beim Einfahren der beiden Formabschnittshälften 22, 23 in die Vorformstrecke werden sie von einem einen entsprechenden Durchbruch 55 im Maschinentisch 25 durchsetzenden Antriebsritzel 56 ergriffen, das in ein entsprechendes, an der Unterseite ausgebildetes Zahnprofil eingreift und das jeweils erste Paar von Formabschnittshälften 22, 23

- 14 -

in Bewegungsrichtung 43 der Formstrecke 24 bewegt. Da die Formabschnittshälften 22, 23 jeweils mit ihrer vorlaufenden Stirnseite 47 an der hinteren Stirnseite 57 der in Bewegungsrichtung 43 vorlaufenden Formabschnittshälfte 22 bzw. 23 dicht anliegen, werden die voreilenden Formabschnittshälften 22, 23 von der jeweils der Spritzdüse 28 nächstliegenden Formabschnittshälfte 22, 23 angetrieben. Außerdem wird hierdurch eine völlig dichte Form hergestellt.

In den Formabschnittshälften 22, 23 sind jeweils Vakuum-Bohrungen 58 ausgebildet, die sich jeweils bis zur auf dem Maschinentisch 25 aufliegenden Unterseite 59 jeder Formabschnittshälfte 22 bzw. 23 erstrecken. Diese Vakuum-Bohrungen 58 sind über Öffnungen 6o in Form langgestreckter Schlitze mit der Formausnehmung 61 verbunden, in der ein Flach-Hohlkörper ausgeformt wird.

Wie insbesondere aus Fig. 9 ersichtlich ist, kann jeweils eine solche langgestreckte, schlitzförmige Öffnung 6o dem Bereich der Formausnehmung 61 zugeordnet sein, in dem die Abstandshalter 4 bzw. die Versteifungsrippen 8 des Flach-Hohlkörpers 1 ausgeformt werden.

In dem Maschinentisch 25 sind nach oben offene Vakuum-Kanäle 62 ausgebildet, mit denen die erwähnten Vakuum-Bohrungen 58 in Überdeckung kommen, wenn die Formabschnittshälften 22, 23 beim Zusammenführen in der Vorformstellung mit ihren Anschlagflächen 4o, 41 zur Anlage gegen die Anschlagleiste 42 kommen. Diese Stellung ist in Fig. 9 wiedergegeben. In diesem Augenblick werden die Vakuum-Bohrungen 58 mit Vakuum beaufschlagt, was zur Folge hat, daß der Schlauch 29' sich bereits gegen die Seiten 26, 27 der Formabschnittshälften 22, 23 im Bereich der Formausnehmung 61 anlegt. Hierdurch erfolgt bereits eine Vorformung des Schlauches 29 bei noch nicht vollständig geschlossener Form. Aus dieser in Fig. 9 dargestellten Stellung erfolgt dann die - bereits geschilderte - völlige Zusammenführung der paarweise einander zugeordneten Formabschnittshälften 22, 23 in die in Fig. 5 unten dargestellte Schließstellung, in der dann die Stege 9 in der Begrenzungswand 2 mit den zugeordneten Flächen der Begrenzungswand 3 des Flach-Hohlkörpers 1 nach den Fig. 1 bis 4 verschweißt werden. Diese Schweißstellen 63 sind in Fig. 6 dargestellt, um gleichzeitig auch anzudeuten, an welcher Stelle die paarweise zusammengehörigen Formabschnittshälften 22, 23 endgültig in ihre Schließstellung zusammengedrückt werden.

Da die Stütz- und Führungsrollen 33, 34 trotz der leichtgängigen Lagerung mittels Wälzlagern 36, 37 und trotz einer allfälligen Beschichtung ihrer Laufflächen mit einer Gleitschicht, beispielsweise aus Tetrafluoräthylen, den flachgezogenen Schlauch 29' in der Regel im Bereich seiner Oberseite 64 und oft auch im Bereich seiner Unterseite 65 beschädigen, da er ja bei der Führung über diese Rollen 33, 34 noch warmplastisch ist, ist es zweckmäßig, diesen Teil des Schlauches 29' nicht zu einem Wandteil des Flach-Hohlkörpers 1 zu machen. Er wird daher, wie aus Fig. 9 ersichtlich ist, mittels oberhalb und unterhalb der

Formausnehmung 61 angebrachter Scherkanten 66 abgeschnitten, die beim Zusammenführen der paarweise einanderzugeordneten Formabschnittshälften 22,23 diese
Scherung vornehmen. Die Scherung erfolgt jeweils unterhalb der oberen Führungszunge 35 und oberhalb der
unteren Führungszunge 35.

Damit die oberen und unteren Führungszungen 35 beim
Schließen der Form nicht mit den dann zur Anlage kommenden Seiten 26, 27 der paarweise einander zugeordneten
Formabschnittshälften 22, 23 kollidieren, sind in diesen
Seiten 26, 27 jeweils oben und unten oberhalb bzw.
unterhalb der Formausnehmung 61 entsprechende Einschnitte 67 vorgesehen.

Die Beaufschlagung der Vakuum-Kanäle 62 erfolgt in
üblicher Weise mittels einer nicht dargestellten Vakuum-Pumpe.

Die Flach-Hohlkörper 1 werden aus einem spritzfähigen,
thermoplastischen, ausreichend biegsamen Material,
beispielsweise Hochdruck-Polyäthylen, oder aber auch
Polypropylen, hergestellt. Die Wandstärke der Begrenzungswände 2, 3 beträgt je nach gewünschtem Anwendungsgebiet zwischen o,5 und 1,5 mm.

Die Wassereintrittsöffnungen 7 werden beim Flach-Hohlkörper nach den Fig. 1 bis 4 in der Weise gebildet,
daß deren Größe entsprechende warzenförmige Ausbauchungen  in der die Leiste 6 bildenden Begrenzungswand 2 ausgeformt werden, die in einem nachgeordneten
Fertigungsgang abgeschnitten und damit geöffnet werden. Diese Fertigungsmethode ist aus der DE-PS 14 59 414 bekannt. Selbstverständlich kann das Herstellen dieser Wasser-Eintrittsöffnungen 7 auch in jeder anderen geeigneten Weise, beispielsweise durch das sogenannte Planetenschlitzverfahren, durchgeführt werden.

Das in den Fig. 1o bis 12 dargestellte Ausführungsbeispiel eines Flach-Hohlkörpers 1' wird in der zuvor geschilderten Weise auf der zuvor dargestellten und beschriebenen Vorrichtung hergestellt, wobei selbstverständlich die Formgebung der die Formausnehmung 61 begrenzenden Flächen der Formabschnittshälften 22, 23 entsprechend angepaßt sind. Dieser Flach-Hohlkörper 1' dient als Wärmetausch-Platte bzw. -Matte für eine Fußbodenheizung. Sie weist ebenfalls wieder zwei Begrenzungswände 2', 3' auf. In ihrer Längsrichtung 5, die also der Bewegungsrichtung 43 bei der Herstellung entspricht, hat sie ein Rastermaß b und eine Rasterbreite a, wobei vorteilhafterweise gilt a≤25o mm und b ein ganzzahliges Vielfaches oder ein ganzzahliger Teil von 1 m. In jeder durch die Rasterlänge b vorgegebenen Rastereinheit sind in der unteren Begrenzungswand 3' Kanäle 13' ausgebildet, die einen etwa halbzylindrischen Querschnitt haben. In der oberen Begrenzungswand 2' sind Kanäle 7o mit etwa trapezförmigem Querschnitt ausgebildet, die die Kanäle 13' überdecken, wobei jeweils längs dieser Kanäle 13', 7o die obere und die untere Begrenzungswand 2', 3' mittels Schweißstellen 63' miteinander verbunden sind. Die durch die Kanäle 13', 7o begrenzten Strömungswege 71 verlaufen in Längsrichtung 5 des Flach-Hohlkörpers 1. Im Bereich der Enden jeder Rastereinheit sind keine Schweißstellen 63 angebracht, so daß beidseitig Verbindungsleitungen 72 für die Strömungswege 71 gebildet werden. Aus jeder Verbindungsleitung 72 mündet mittig ein Verbindungsstutzen 73 aus, der die quer verlaufenden Verbindungsleitungen 72 zweier benachbarter, aber im Abstand voneinander befindlicher Rastereinheiten verbindet. Zwischen diesen Rastereinheiten befinden sich mehrere Blindkammern 74, von denen die dem Verbindungsstutzen 73 unmittelbar benachbarten Blindkammern 74 an ihren Schweißstellen 63' derartig abgequetscht sind, daß sie mit Daumendruck oder mit einem Schraubenzieher herausgetrennt werden können, wie in Fig. 1o oben und unten erkennbar ist. Die in der Trennlinie 75 zweier benachbarter Rastereinheiten aneinanderstoßenden Blindkammern bleiben beim Durchtrennen des Flach-Hohlkörpers längs einer solchen Trennlinie jeweils am entsprechenden Teil des Flach-Hohlkörpers 1'. Der Verbindungsstutzen 73 und an den Längsseiten angebrachte Kupplungsleiste 14' bzw. Kupplungsprofil 15' müssen mit einem Messer oder einer Säge durchtrennt werden. Wenn zwei solche Flach-Hohlkörper 1' - wie in Fig. 1o dargestellt - nebeneinanderverlegt werden sollen, dann werden sie mittels Kupplungsleiste 14' und Kupplungsprofil 15' miteinander befestigt und dann endseitig ihre Verbindungsstutzen 73 mittels eines C-förmig gebogenen Verbindungsrohres 76, das auf die Verbindungsstutzen 73 aufgesteckt und verklebt oder elektrisch verschweißt wird, verbunden. Ein solches Verbindungsrohr 76 kann auch zwei L-förmigen Rohrstücken durch Stumpfschweißung 77 hergestellt werden.

Um zu erreichen, daß durch alle Strömungswege 71 das Strömungsmedium mit etwa gleicher Geschwindigkeit entsprechend den Strömungsrichtungspfeilen 78 strömt ist vor den der Einmündung des jeweiligen Verbindungsstutzens 73 benachbarten Strömungswegen 71 ein Quersteg 79 durch entsprechende Verschweißung der Begrenzungswände 2', 3' ausgebildet, der vom Strömungsmedium erst umströmt werden muß. Durch diesen Quersteg 79 wird zusätzlich zu der über fast die volle Breite a gehenden Verbindungsleitung 72 noch ein diesem nachgeordneter kurzer Querkanal 8o begrenzt.

In einigen die Strömungswege 71 seitlich begrenzenden Schweißstellen 63' sind Befestigungslöcher 81 vorgesehen.

Die Verlegung dieses primär als Fußbodenheizung dienenden Flach-Hohlkörpers 1 erfolgt auf einem Fußbodenestrich 82. Unterhalb des Flach-Hohlkörpers 1' ist eine wärmeisolierende Platte 83, beispielsweise aus Polyurethan-Hartschaumstoff, angeordnet, während auf ihrer Oberseite eine gut wärmeleitende Platte 84, beispielsweise eine Hartfaserplatte angeordnet ist. Der Verbund zwischen den beiden Platten 83, 84 und dem zwischen ihnen angeordneten Flach-Hohlkörper 1' erfolgt mittels Schrauben 85, die von unten durch die wärmeisolierende Platte 83 und die Befestigungslöcher 81 in die wärmeleitende Platte 84 geschraubt sind. Aufgrund der Formgebung der Kanäle 13' und 7o sind große Anlageflächen und damit Wärmeübergangsflächen zwischen der oberen Begrenzungswand 2 und der wärmeleitenden Platte 84 vorgesehen, während nur eine geringe Anlagefläche und damit nur ein geringer Wärmeübergang zwischen der unteren Begrenzungswand 3' und der wärmeisolierenden Platte 83 gegeben ist. Oberhalb der wärmeleitenden Platte 84 wird dann ein üblicher Fußbodenbelag 86, beispielsweise Keramikplatten od. dgl., aufgebracht. Insoweit als die aus den Platten 83, 84 und dem Flach-Hohlkörper 1' gebildeten Fußbodenheizungen nicht auf dem Fußbodenestrich 82 verlegt sind, werden Blindplatten in gleicher Dicke verlegt.

- 2o -

Die zwickelförmigen Freiräume 87, 88 zwischen den Strömungswegen 71 können zur Erhöhung der Wärmeisolierung nach unten und zur Erhöhung der Wärmeleitung nach oben und zur Erhöhung der Stabilität mit einem geeigneten Material ausgefüllt werden.

Der geschilderte Flach-Hohlkörper 1' kann auch als Absorber-Platte bzw. -Matte für eine Wärmepumpe eingesetzt werden, und zwar auch für sogenannte Energiepakete oder Energiezäune, wenn geeignete Abstandshalter vorgesehen werden, um ein Paketieren solcher Flach-Hohlkörper zu ermöglichen.

Patentansprüche

1. Verfahren zur Herstellung eines Flach-Hohlkörpers, insbesondere einer Lüftungs- und Drainage-Platte oder -Matte oder Wärmetausch-Platte oder -Matte, mit Flüssigkeitstransport-Kanälen, die Flüssigkeits-Eintrittsöffnungen und Flüssigkeits-Austrittsöffnungen aufweisen, unter Verwendung einer auf einer Formstrecke bewegten, aus endlos geführten Formabschnittshälften bestehenden Form, die beim Einlauf in die Formstrecke jeweils paarweise unter Schließen der Form aufeinanderzu und in Bewegungsrichtung dicht aneinander anliegend geführt werden, wobei der Form ein noch warmplastischer Schlauch zugeführt und unter Vakuum in der Form verformt wird, dadurch gekennzeichnet, daß der Schlauch bereits vor dem Zusammenführen zweier Formabschnittshälften zumindest in einem Teilbereich seines Querschnitts mit Vakuum beaufschlagt und über einen Teil seines Querschnittes unter Freilassung von Hohlräumen unter Bildung von Schweißstellen zusammengedrückt wird.

2. Verfahren nach Anspruch 1, dadurch gekennzeichnet, daß die Vakuumbeaufschlagung o,2 bis o,5 Sekunden vor dem Schließen der Form einsetzt.

3. Verfahren nach einem der Ansprüche 1 oder 2, dadurch gekennzeichnet, daß Stützluft geringen Druckes in den noch warmplastischen Schlauch eingeblasen wird.

4. Verfahren nach Anspruch 3, dadurch gekennzeichnet, daß Stützluft mit einem Druck von o,o1 bis o,o5 bar eingeblasen wird.

5. Verfahren nach einem der Ansprüche 1 bis 4, dadurch gekennzeichnet, daß der noch warmplastische Schlauch vor der Vakuumbeaufschlagung flachgeformt wird.

6. Verfahren nach einem der Ansprüche 1 bis 5, dadurch gekennzeichnet, daß der Schlauch mit einer Wandstärke von o,5 bis 2 mm zugeführt wird.

7. Vorrichtung zur Ausübung des Verfahrens nach einem der Ansprüche 1 bis 6, mit einer auf einer Formstrecke (24) bewegbaren, aus endlos geführten Formabschnittshälften (22, 23) bestehenden Form, die beim Einlauf in die Formstrecke (24) jeweils paarweise aufeinander zu und in Bewegungsrichtung (43) dicht aneinander anliegend führbar sind, wobei die jeweils zwei einander zugeordneten Formabschnittshälften (22, 23) eine entsprechend dem zu erzeugenden Profil geformte Formausnehmung (61) aufweisen, und wobei die Formabschnittshälften (22, 23) mit jeweils mindestens einer zu ihrer Unterseite (65) einerseits und zu der Formausnehmung (61) andererseits führenden Vakuum-Bohrung (58) versehen sind, die mit mindestens einem Vakuum-Kanal (62) in einem die Form auf der Formstrecke (24) tragenden Maschinentisch (25) in Überdeckung bringbar ist, dadurch gekennzeichnet, daß der mindestens eine Vakuum-Kanal (62) derart ausgebildet ist, daß die mindestens eine Vakuum-Bohrung (58) vor Schließen der Form mit diesem Vakuum-Kanal (62) in Überdeckung kommt.

8. Vorrichtung nach Anspruch 7 zur Ausübung des Verfahrens nach Anspruch 5, dadurch gekennzeichnet, daß der Formstrecke (24) Stütz- und Führungsrollen (33, 34) für den Schlauch 29, 29') vorgeordnet sind.

9. Vorrichtung nach Anspruch 8, dadurch gekennzeichnet, daß zusätzlich zu den Stütz- und Führungsrollen (33, 34) Führungszungen (35) vorgesehen sind, die bis in die Form hineinragen.

_Fig.4_

_Fig.2_

_Fig.1_

_Fig.3_

_Fig. 5_

*Fig.6*

*Fig.7*   *Fig.8*   *Fig.9*

*Fig.11*

*Fig.10*

*Fig.12*

0044389

Nummer der Anmeldung

EP 81 10 4032.8

**Europäisches Patentamt**

# EUROPÄISCHER RECHERCHENBERICHT

## EINSCHLÄGIGE DOKUMENTE

### KLASSIFIKATION DER ANMELDUNG (Int. Cl.³)

| Kategorie | Kennzeichnung des Dokuments mit Angabe, soweit erforderlich, der maßgeblichen Teile | betrifft Anspruch |
|---|---|---|
| | DE - B2 - 2 413 878 (W. HEGLER)<br>* Spalte 5, Zeilen 31 bis 34 *<br>-- | 1,7 |
| D | DE - A - 2 210 445 (EUROPLASTIC)<br>* Anspruch 3; Fig. 3 *<br>-- | 1,7 |
| D | DE - A1 - 2 832 350 (W. HEGLER)<br>* Seite 17, Zeilen 16 bis 20 *<br>-- | 1,7 |
| A | US - A - 2 697 248 (M.O. LONGSTRETH et al.)<br>* Spalte 2, Zeilen 12 bis 18 *<br>-- | 8 |
| A | US - A - 2 668 324 (W.J. JOHNSON)<br>* Spalte 2, Zeilen 10 bis 13 *<br>-- | |
| A | DE - A1 - 2 553 574 (RÖHM GMBH)<br>* Ansprüche 1 bis 9; Fig. 6 *<br>-- | |
| D,A | DE - A - 2 061 027 (W. HEGLER)<br>* Seite 14, Zeilen 4 bis 8;<br>Fig. 4, 11 *<br>-- | |
| D,A | DE - C - 1 459 414 (W. HEGLER)<br>* Ansprüche 1, 2 *<br>-- | |
| D,A | DE - A1 - 2 521 374 (ROSEMEIER KG)<br>* Ansprüche 1 bis 8 *<br>---- | |

B 29 C   17/02
B 29 D   23/18

### RECHERCHIERTE SACHGEBIETE (Int. Cl.³)

B 29 C   17/00
B 29 C   24/00
B 29 D   7/00
B 29 D   9/00
B 29 D   23/00
B 32 B   3/00
E 04 B   1/64
F 24 D   5/10

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 21-08-1981 | BITTNER |

EPA form 1503.1   06.78